(19) Europäisches Patentamt
European Patent Office
Office européen des brevets

(11) **EP 2 696 580 B1**

(12) **EUROPEAN PATENT SPECIFICATION**

(45) Date of publication and mention
of the grant of the patent:
**17.02.2021 Bulletin 2021/07**

(21) Application number: **12768031.2**

(22) Date of filing: **23.03.2012**

(51) Int Cl.:
*H04N 7/173* (2011.01)　　*H04B 1/16* (2006.01)
*H04H 60/13* (2008.01)　　*H04J 3/00* (2006.01)
*H04J 11/00* (2006.01)　　*H04N 21/434* (2011.01)
*H04N 21/61* (2011.01)

(86) International application number:
**PCT/JP2012/057536**

(87) International publication number:
**WO 2012/137612 (11.10.2012 Gazette 2012/41)**

(54) **DATA RETRIEVAL DEVICE, DATA RETRIEVAL METHOD, AND PROGRAM**

DATENABRUFVORRICHTUNG, DATENABRUFVERFAHREN UND PROGRAMM

DISPOSITIF DE RÉCUPÉRATION DE DONNÉES, PROCÉDÉ DE RÉCUPÉRATION DE DONNÉES ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.04.2011 JP 2011086305**

(43) Date of publication of application:
**12.02.2014 Bulletin 2014/07**

(73) Proprietor: **Saturn Licensing LLC**
**New York, NY 10022-3211 (US)**

(72) Inventors:
• **OKADA Satoshi**
**Tokyo 108-0075 (JP)**
• **YOKOKAWA Takashi**
**Tokyo 108-0075 (JP)**

(74) Representative: **D Young & Co LLP**
**120 Holborn**
**London EC1N 2DY (GB)**

(56) References cited:
**EP-A1- 1 850 339　　EP-A2- 0 649 259**
**JP-A- 2006 186 689　　JP-A- 2009 278 186**
**JP-A- 2010 041 496　　JP-A- 2011 041 098**
**US-A1- 2009 185 625　　US-A1- 2011 037 904**

• 'Frame structure channel coding and modulationfor a second generation digital terrestrialtelevision broadcasting system (DVB-T2)' DVB PROJECT, [Online] 2008, pages 17 - 24,82,118-128, XP002545919 Retrieved from the Internet: <URL:http://www. dvb.org/technology/dvbt2/a122.tm3980r5. DVB-T2.pdf> [retrieved on 2012-06-05]

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present technology relates to a data readout device, a data readout method, and a program. To be specific, a data readout device, a data readout method, and a program that minimize occurrence of a period in which no data is output when an input and an output is asynchronously performed.

BACKGROUND ART

In recent years, as a system of transmitting a digital signal, a modulation system called orthogonal frequency division multiplexing (OFDM) system has been used. In the OFDM system, a large number of orthogonal subcarriers are prepared in a transmission band, and data are assigned to the amplitude and the phase of each subcarrier and are digitally modulated by phase shift keying (PSK) or quadrature amplitude modulation (QAM).

The OFDM system is frequently applied to terrestrial digital broadcasting that is strongly influenced by multipath disturbance. Examples of the terrestrial digital broadcasting that employs the OFDM system include digital video broadcasting-terrestrial (DVB-T) standard and integrated services digital broadcasting-terrestrial (ISDB-T) standard.

By the way, digital video broadcasting (DVB)-T.2 is being formulated by European Telecommunication Standard Institute (ETSI) as a standard for the next-gen terrestrial digital broadcasting (see Non-Patent Document 1).

CITATION LIST

NON-PATENT DOCUMENT

Non-Patent Document 1: DVB BlueBook A122 Rev.1, Frame structure channel coding and modulation for a second generation digital terrestrial television broadcasting system (DVB-T2) September 1, 2008, a home page of DVB, [Searched on March 17, 2011], Internet <URL:http://www.dvb.org/technology/standards/>

SUMMARY OF THE INVENTION

PROBLEMS TO BE SOLVED BY THE INVENTION

DVB-T.2 uses a system called multiple physical layer pipe (M-PLP) . In the M-PLP system, data are transmitted using a packet sequence called Common PLP that is an extraction of a common packet from a plurality of transport streams (hereinafter referred to as TSs) and a packet sequence called Data PLP that is the TS from which the common packet is extracted. The reception side restores one TS from the Common PLP and the Data PLP.

The reception side restores and outputs the TS by synchronizing the Common PLP and the Data PLP. However, the restored TS is used up before a next frame arrives if the output timing is too early, and thus a non-output period may occur during an output period of the TS.

There is a possibility that decoding by a decoder at a subsequent stage fails if the non-output period of TS occurs, and thus there is a need for suppressing the non-output period of TS.

The present invention has been made in view of the foregoing, and enables avoidance of the non-output period of TS and reliable decoding. US 2011/0037904 A1 discloses a receiving apparatus including, a buffer configured to store packets of a first packet sequence made up of packets extracted from one transport stream that are common to packets of another transport stream and packets of a second packet sequence made up of common packets, a read control section configured to read the packets of the first packet sequence and the second packet sequence stored in the buffer after the passing of a predetermined time after synchronization is established between the packets of the first packet sequence and the packets of the second packet sequence, thereby reconstructing one transport stream from the first packet sequence and the second packet sequence, and an output section configured to output the reconstructed transport stream.

SOLUTIONS TO PROBLEMS

The scope of protection of the present invention is as defined in the appended claims. Any embodiments not falling within such scope should be construed as examples which do not describe parts of the invention.

BRIEF DESCRIPTION OF DRAWINGS

Fig. 1 is a diagram illustrating an outline of a configuration of a transmitter and a receiver in a case where M-PLP system is used in DVB-T.2.

Fig. 2 is a diagram illustrating a configuration of a packet at a transmission side.

Fig. 3 is a diagram illustrating a configuration of Common PLP and Data PLP at the transmission side.

Fig. 4 is a diagram illustrating a configuration of the Common PLP and the Data PLP in a Null packet deletion mode at the transmission side.

Fig. 5 is a diagram illustrating a configuration of an embodiment of a reception device.

Fig. 6 is a diagram illustrating a configuration example of an output I/F.

Fig. 7 is a diagram illustrating a configuration of Common PLP and Data PLP at a reception side.

Fig. 8 is a diagram for describing a method of restoring a TS at the reception side.

Fig. 9 is a diagram for describing details of a method of restoring a TS at the reception side.

Fig. 10 is a diagram for describing a method of calculating a TS rate.

Fig. 11 is a diagram describing timings of writing and readout of a buffer.

Fig. 12 is a diagram for describing timings of writing and readout of a buffer.

Fig. 13 is a diagram for describing a TTO.

Fig. 14 is a diagram for describing timings of writing and readout of a buffer.

Fig. 15 is a diagram for describing a recording medium.

MODE FOR CARRYING OUT THE INVENTION

Hereinafter, examples of the present technology will be described with reference to the drawings.

[An outline of an overall configuration]

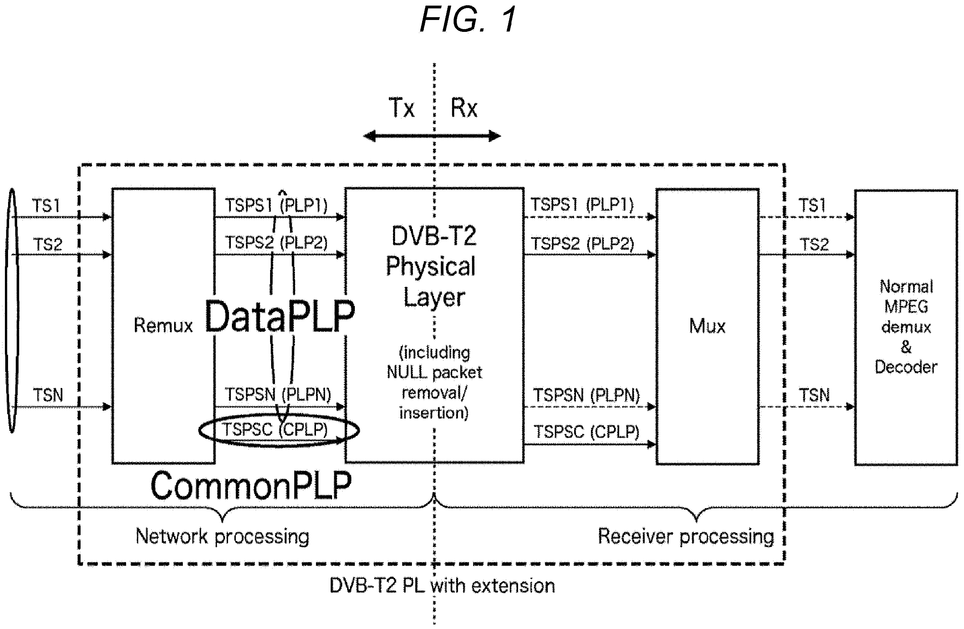

Fig. 1 is a diagram illustrating an outline of a configuration of a transmission device (Tx) and a receiver (Rx) in a case where the M-PLP system is used in DVB-T.2. As illustrated in Fig. 1, when a plurality of TSs (TS1 to TSN in the drawing) is input at a constant bit rate at a transmission device side, a common packet is extracted from packets that configure the TSs, and a packet sequence called Common PLP is generated (TSPSC (CPLP) in the drawing). Further, the TSs, from which the common packet is extracted, are packet sequences called Data PLP (TSPS1 (PLP1) to TSPSN (PLPN)).

That is, at the transmission device side, one Common PLP and N Data PLP are generated from N TSs. Therefore, a coding rate of error correction and a modulation system such as OFDM can be adaptively allocated to each PLP. Note that, in the present embodiment, simple description of PLP includes both of the Common PLP and the Data PLP. Also, description of Common PLP and Data PLP includes meaning of individual packets that configure the Common PLP and the Data PLP.

For example, in a case of a transport stream (TS) packet of MPEG, a plurality of Data PLPs may include the same information such as a service description table (SDT) and an event information table (EIT), and such common information is transmitted separately as the Common PLP, so that a decrease in transmission efficiently can be avoided.

Meanwhile, at the receiver side, the plurality of received Data PLPs (TSPS1 (PLP1) to TSPSN (PLPN) in the drawing) and the Common PLP (TSPSC (CPLP) in the drawing) are demodulated by the demodulation system, such as OFDM, and only a desired PLP (TSPS2 (PLP2) in the drawing) is then extracted and is subjected to error correction processing, so that a desired TS can be restored.

For example, as illustrated in Fig. 1, when the TSPS2 (PLP2) is selected from among the TSPS1 (PLP1) to TSPSN (PLPN), the TS2 is restored using the TSPS2 (PLP2) as the Data PLP and the TSPSC (CPLP) as the Common PLP. Accordingly, since a TS can be restored by retrieving one Data PLP and the Common PLP, there is an advantage that the receiver has better operation efficiency. The TS restored at the receiver side is then output to a decoder of a subsequent stage. The decoder applies MPEG decoding to coded data included in the TS, for example, and outputs image data and voice data obtained as a result of the decoding.

As described above, when the M-PLP system is used in DVB-T.2, N Data PLPs and one Common PLP are generated from N TSs at the transmission device (Tx) side and are transmitted, and a desired TS is restored (re-generated) from a desired Data PLP and one Common PLP at the receiver (Rx) side.

[Processing of a transmission device]

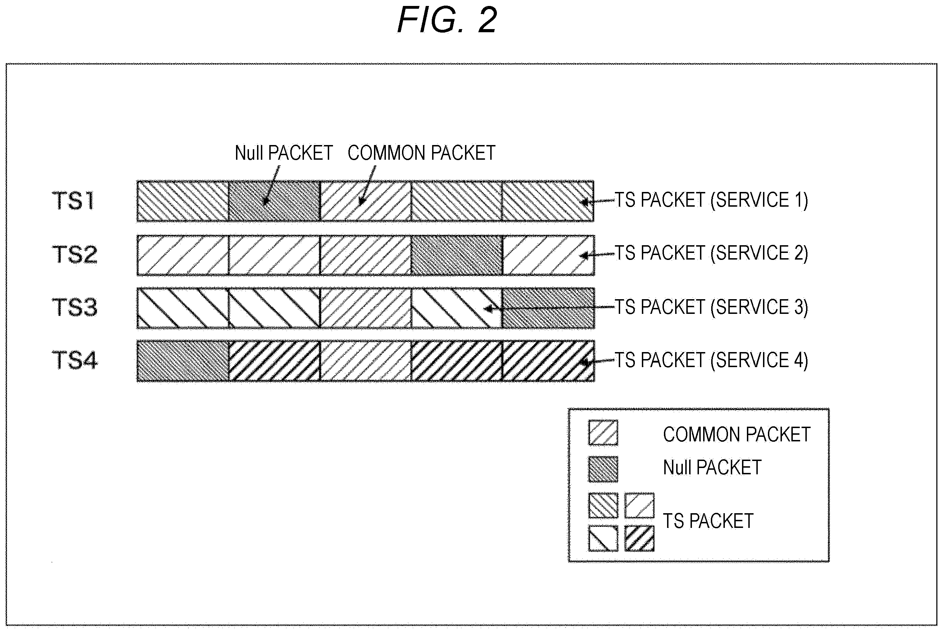

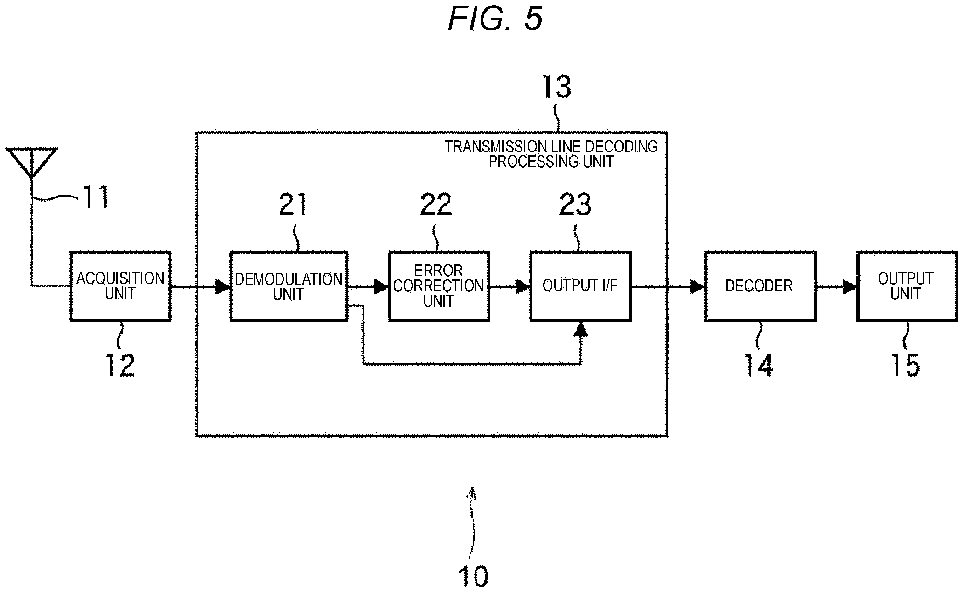

Next, processing performed in a transmission device will be described with reference to Figs. 2 to 4, and then, processing performed in a receiver will be described with reference to Figs. 5 to 8. Note that, to simplify description of this transmission/reception processing, four TSs of TS1 to TS4 are input to the transmission device, and the PLP generated from the TSs is subjected to processing such as error correction and OFDM modulation, and is then transmitted to the receiver.

As illustrated in Fig. 2, five squares corresponding to the TS1 to TS4 represent packets, and in the present embodiment, TS packets configuring these TSs are classified into three types of packets: a TS packet, a Null packet, and a common packet.

Here, the TS packet is a packet in which data for providing services such as MPEG encoder (services 1 to 4 in the drawings) are stored, for example. The Null packet is data for adjustment transmitted with a view to constantly maintain the information amount output from the transmission side when there is no data to be transmitted at the transmission side. For example, the Null packet defined in MPEG is a packet, in which four bytes of the head of the TS packet are 0x47, 0x1F, 0xFF, and 0x1F, and all payloads employ 1 bit, for example.

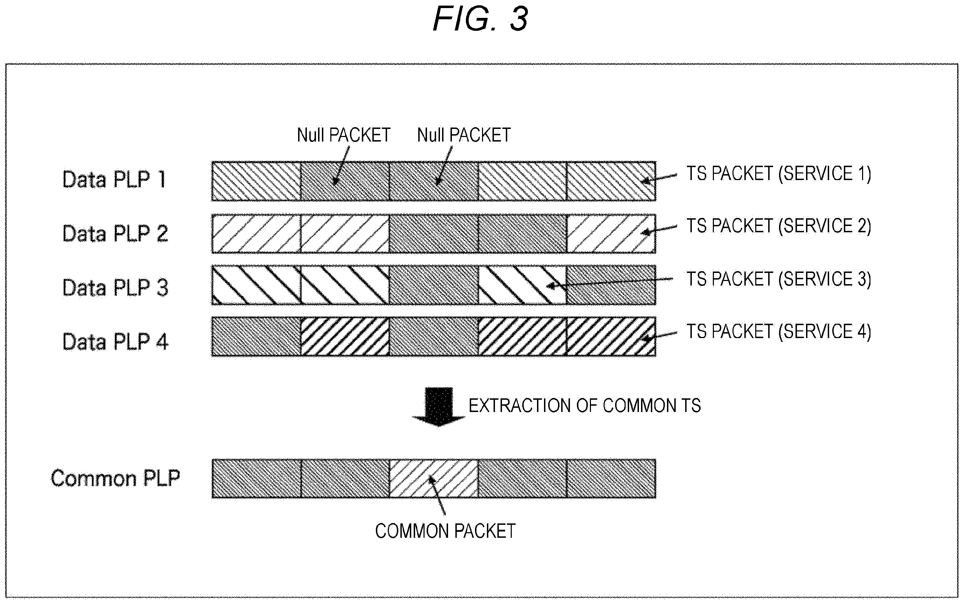

The common packet is a packet common to data stored in a plurality of TSs. For example, in the case of MPEG, control information such as SDT and EIT described above corresponds to the common packet. That is, in the example of Fig. 2, the third packets from the left in the drawing among the five packets respectively configuring the TS1 to TS4 are the common packets. Since the common packets include the same information, the common packets are extracted as the Common PLP, as illustrated in Fig. 3.

To be specific, in the TS1 to TS4 of Fig. 2, when a common packet exists in the TSs, as illustrated in Fig. 3, the common packet is extracted as the Common PLP, and the extracted common packet is replaced with the Null packet. Then, the TSs, from which the common packet is extracted, become sequences called Data PLP, that is, Data PLP1 to Data PLP4.

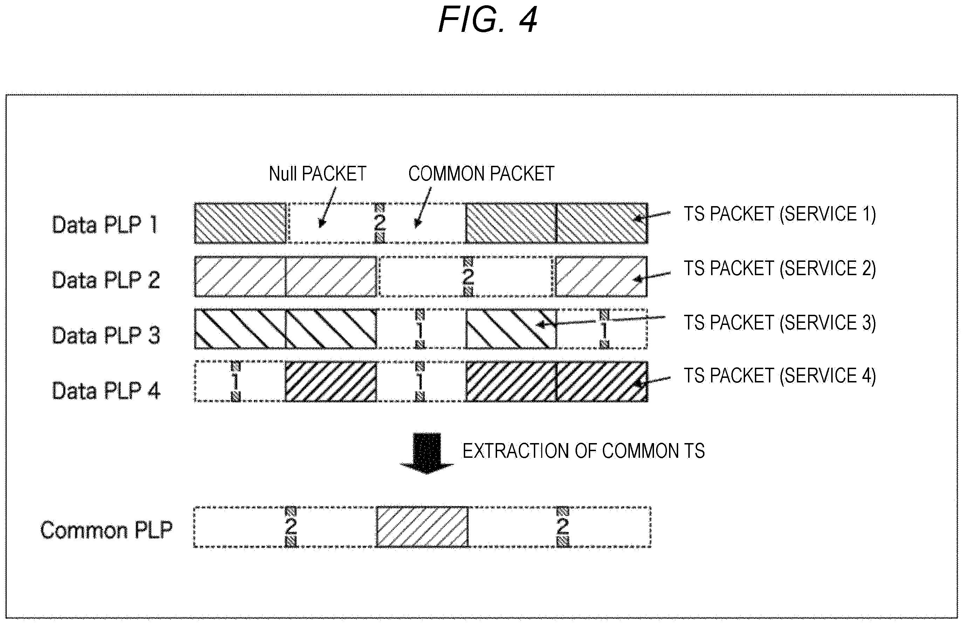

Further, when the transmission device is operated in a mode called Null packet deletion, the Null packet is transmitted as a signal (signaling) called Deleted Null Packet (DNP) having one byte. For example, in the Data PLP1 of Fig. 3, the second and third packets from the left in the drawing are the Null packets, and in the case of two subsequent Null packets, the Null packets are replaced with a one byte signal having a value of 2, as illustrated in Fig. 4. That is, the value of the DNP corresponds to the number of succession of the Null packets. For example, in the Data PLP3 of Fig. 3, the third and fifth packets from the left in the drawing are independent Null packets, and the Null packets are respectively replaced with one byte signals having a value of 1, as illustrated in Fig. 4.

As described above, when the Null packet is replaced with the DNP of one byte, the Data PLP1 to Data PLP4 and the Common PLP of Fig. 3 go into a state as illustrated in Fig. 4. Accordingly, in the transmission device, the Data PLP1 to Data PLP4 and the Common PLP are generated.

As described above, in the transmission device, four Data PLPs and one Common PLP are generated from four TSs, and signals thereof are subjected to predetermined processing such as error correction and OFDM modulation, and OFDM signals obtained as a result of the processing are transmitted to the receiver through a predetermined transmission line.

[Processing of a receiver]

Next, processing of the receiver will be described with reference to Figs. 5 to 12. Note that, as described above, the OFDM signals received by the receiver are generated such that the Data PLP1 to Data PLP4 and the Common PLP of Fig. 4 are subjected to the processing such as error correction and OFDM modulation according to the processing of the transmission device. First, a configuration of a reception device that receives and processes the OFDM signals generated at and transmitted from the above-described transmission device side will be described with reference to Figs. 5 to 6.

Fig. 5 is a diagram illustrating a configuration of an embodiment of the reception device. A reception device 10 illustrated in Fig. 5 is configured from an antenna 11, an acquisition unit 12, a transmission line decoding processing unit 13, a decoder 14, and an output unit 15. The antenna 11 receives an OFDM signal transmitted from the transmission device through a transmission line, and supplies the signal to the acquisition unit 12. The acquisition unit 12 is configured from, for example, a tuner, a set top box (STB), and the like, converts a frequency of the OFDM signal (RF signal) received by the antenna 11 into a frequency of an intermediate frequency (IF) signal, and supplies the converted signal to the transmission line decoding processing unit 13.

The transmission line decoding processing unit 13 restores TS from PLP obtained by applying necessary processing such as demodulation and error correction to the OFDM signal from the acquisition unit 12, and supplies the TS to the decoder 14. That is, the transmission line decoding processing unit 13 is configured from a demodulation unit 21, an error correction unit 22, and an output I/F (interface) 23.

The demodulation unit 21 performs demodulation processing of the OFDM signal from the acquisition unit 12, and outputs desired Data PLP and one Common PLP obtained as a result of the demodulation processing to the error correction unit 22 as a demodulation signal. The error correction unit 22 applies predetermined error correction processing to the PLP that is the demodulation signal obtained from the demodulation unit 21, and outputs the PLP obtained as a result of the error correction processing to the output I/F 23.

Here, in the transmission device, data such as images and voices as a program is subjected to Moving Picture Experts Group (MPEG) encoding, and the PLP generated from the TS configured from TS packets including the MPEG encoded data is transmitted as the OFDM signal. In addition, in the transmission device, as measures against an error caused in the transmission line, the PLP is coded into a Reed Solomon (RS) code and a low density parity check (LDPC) code, for example. Therefore, the error correction unit 22 performs processing of decoding the codes as error correction coding processing.

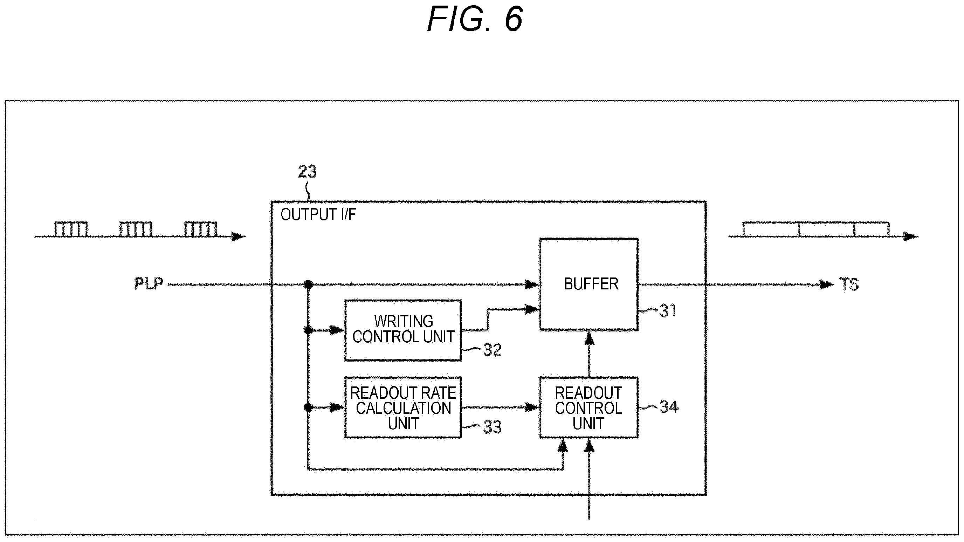

The output I/F 23 restores the TS from the PLP supplied from the error correction unit 22, and performs processing of outputting the restored TS to an outside at a predetermined constant rate (hereinafter, referred to as TS rate) . To be specific, the output I/F 23 obtains a predetermined delay time from when the Common PLP and the Data PLP are synchronized with each other to when the restoration of the TS is started based on delay time calculation information supplied from the demodulation unit 21 and the PLP supplied from the error correction unit 22. The output I/F 23 does not start the restoration of the TS immediately after the Common PLP and the Data PLP are synchronized with each other and performs the restoration of the TS after a predetermined delay time has passed, and supplies the TS to the decoder 14 according to the TS rate. Note that details of a configuration of the output I/F 23 will be described below with reference to Fig. 6.

The decoder 14 performs MPEG decoding of the coded data included in the TS supplied from the output I/F 23, and supplies image data and voice data obtained as a result of the decoding to the output unit 15. The output unit 15 is configured from a display, a speaker, and the like, for example, and displays an image and outputs a voice corresponding to the image and voice data supplied from the decoder 14.

[A detailed configuration example of an output I/F]

Fig. 6 illustrates a configuration example of the output I/F 23 of Fig. 5. In the example of Fig. 6, the output I/F 23 is configured from a buffer 31, a writing control unit 32, a readout rate calculation unit 33, and a readout control unit 34. The PLP (the Common PLP and the Data PLP) supplied from the error correction unit 22 is supplied to the buffer 31, the writing control unit 32, the readout rate calculation unit 33, and the readout control unit 34.

The buffer 31 sequentially accumulates the PLP supplied from the error correction unit 22 according to writing control by the writing control unit 32. Further, the buffer 31 reads out the accumulated PLP and restores the TS according to readout control by the readout control unit 34, and outputs the TS to the decoder 14. The writing control unit 32 controls a writing address of the buffer 31 based on the PLP supplied from the error correction unit 22, and accumulates the PLP in the buffer 31.

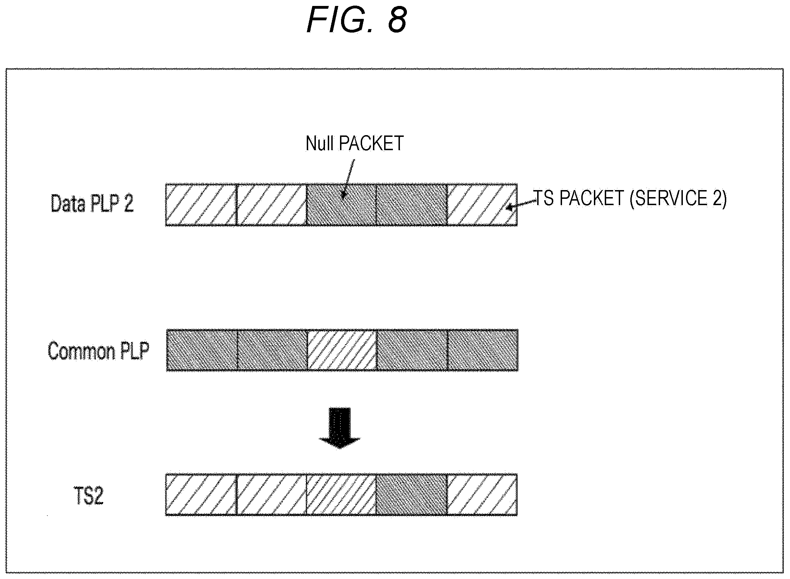

The readout rate calculation unit 33 calculates the TS rate based on the PLP supplied from the error correction unit 22, and supplies the TS rate to the readout control unit 34. Details of the processing of calculating the TS rate performed by the readout rate calculation unit 33 will be described with reference to Fig. 8. The TS rate calculated by the calculation has a possibility of causing an underflow or an overflow. Following description of such a TS rate calculated by the calculation, readout using signaling not to cause an underflow and an overflow will be described.

The readout control unit 34 controls a readout address of the buffer 31 so that the TS restored from the PLP read out from the buffer 31 can be output according to the TS rate supplied from the readout rate calculation unit 33.

The output I/F 23 also has a function of smoothing. As illustrated in Fig. 6, even though the PLP is intermittently input, it is necessary that the TSs are sequentially output as much as possible, and readout from the buffer 31 is performed to output the TSs in sequence.

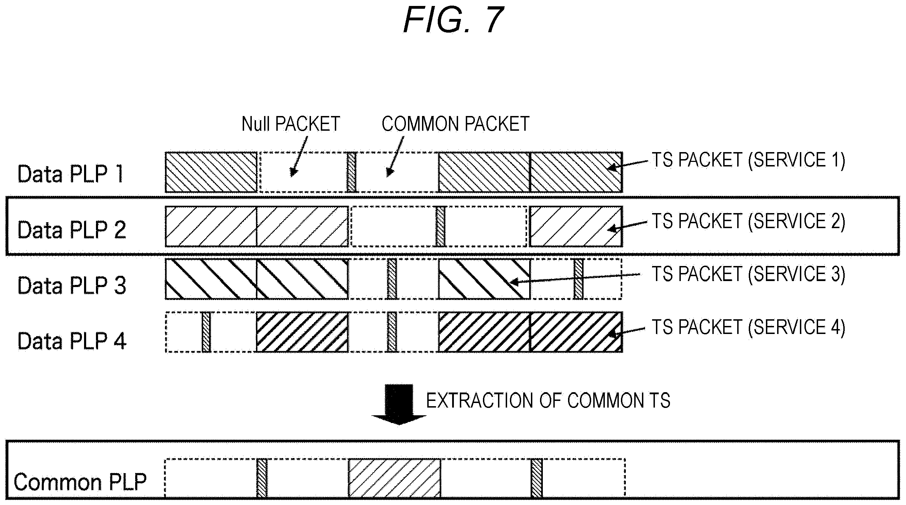

Description is added to the processing in the reception device 10. In the reception device 10, the OFDM signal transmitted from the transmission device through a predetermined transmission line is received, and is subjected to the predetermined processing such as OFDM demodulation by the demodulation unit 21, so that the Data PLP1 to Data PLP4 and the Common PLP of Fig. 7 corresponding to the Data PLP1 to Data PLP4 and the Common PLP of Fig. 8 are obtained. Then, for example, when a service 2 is selected by a user operation, the Data PLP2 is retrieved from among the Data PLP1 to Data PLP4, and the retrieved Data PLP2 and the Common PLP are subjected to predetermined processing such as error correction by the error correction unit 22, and are input to the output I/F 23.

That is, only the Data PLP2 enclosed by a thick frame of Fig. 7 and the Common PLP corresponding to the Data PLP2 are input to the output I/F 23. Then, with respect to the input Data PLP2 and Common PLP, as illustrated in Fig. 8, the output I/F 23 replaces the Null packet arranged in the Data PLP2 with a common packet arranged in the corresponding to the Common PLP. Accordingly, an original TS2 similar to the TS2 of Fig. 2 is restored as illustrated in Fig. 8.

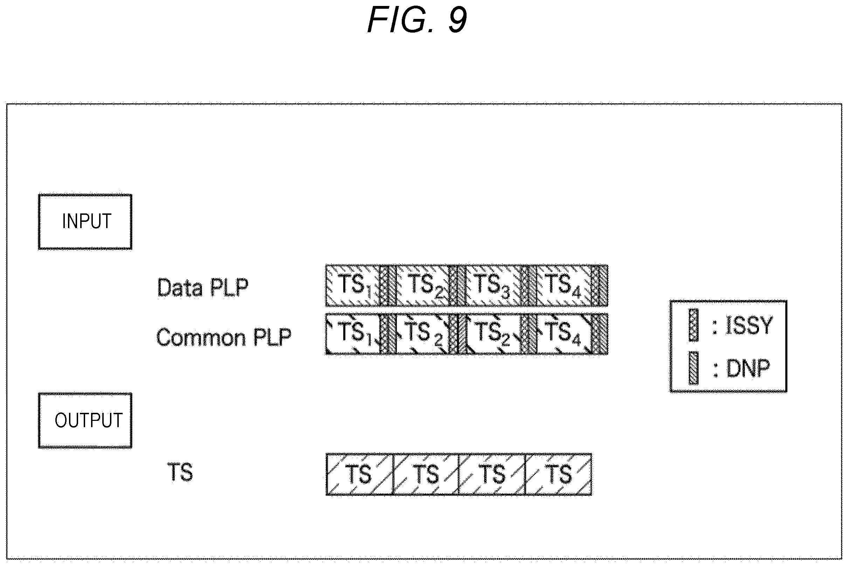

Fig. 9 is a diagram for describing details of a desired Data PLP (Data PLP2) and the Common PLP input to the output I/F 23 and a TS output from the output I/F 23. As illustrated in Fig. 9, information called DNP and Input Stream Synchronizer (ISSY) are added to the Data PLP and the Common PLP input to the output I/F 23 by TS packet units.

The ISSY includes information such as an input stream time reference (ISCR), a buffer size (BUFS), and a time to output (TTO) . The ISCR is information indicating a timestamp added at the transmission device side at the time of transmitting each TS packet. The BUFS information indicates a necessary buffer amount of the PLP. The reception device 10 can determine a buffer region by referring to the information.

The TTO is information indicating a time to output a TS packet from a head of a P1 symbol arranged in a T2 frame in which processing of the TS packet is being performed. The DNP is information that is added when the transmission device is operated in the Null packet deletion mode, as described above, and the number of succession of successive Null packets are transmitted as a signal of one byte. For example, the reception device 10 can reproduce an original packet sequence using three successive Null packets where DNP = 3.

The output I/F 23 detects a combination of synchronous 2 packets from the Data PLP and the Common PLP using the information obtained from the PLP, and adjusts timings of the Data PLP and the Common PLP in synchronization with each other. To be specific, the readout rate calculation unit 33 in the output I/F 23 can obtain a rate (TS rate) to output the TS with the following formula (1) by restoring the Data PLP to the original packet sequence using the DNP added to the Data PLP, and by reading out the ISCR added to the TS packet.

[Mathematical Formula 1]

$$\text{Rate} = \frac{\text{N\_bits} \times (\text{N\_packets} + \Sigma \text{DNP})}{(\text{ISCR\_b} - \text{ISCR\_a}) \times \text{T}} \quad \cdots (1)$$

Note that, in the formula (1), N_bits represents a bit number per packet, and is, for example, substituted by 1504 (bit/packet). T represents a unit of elementary period, and is substituted by a value, such as 7/64us, in a case of 8 MHz band, for example.

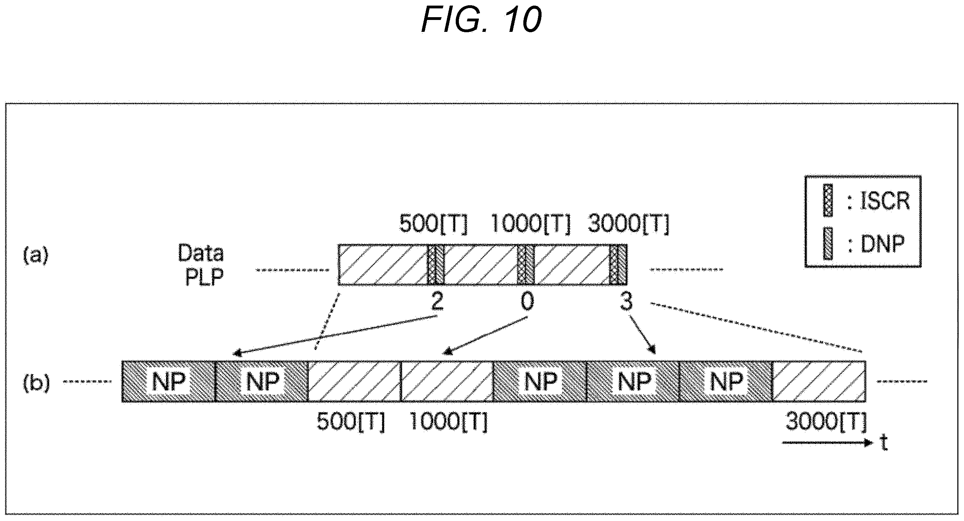

Fig. 10 is a diagram describing an example of the calculation of the TS rate executed in the readout rate calculation unit 33. Note that, in Fig. 10, as indicated by the bottom arrow, the direction of time proceeds from left to right in the drawing. The TS packet, and the DNP and the ISCR added to the TS packets are input to the readout rate calculation unit 33 as the Data PLP, as illustrated in Fig. 10 (a). In the case of this example, the DNP added to the first TS packet from the right in the drawing indicates 3 and the ISCR indicates 3000 [T]. Similarly, the DNP of the second TS packet indicates 0 and the ISCR indicates 1000 [T], and the DNP of the third TS packet indicates 2 and the ISCR indicates 500 [T].

When the Null packet is restored to the original condition using these DNPs, the Data PLP of Fig. 10 (a) becomes the one as illustrated in Fig. 10(b). That is, the first TS packet is followed by the three Null packets ("NP" in the drawing), and two more Null packets are arranged after the second and third TS packets in succession. Therefore, the Pts is obtained in the following manner where the packet rate is Pts.

$$\text{Pts} = (\text{ISCR\_b} - \text{ISCR\_b})/(\text{N\_packets} + \Sigma \text{DNP}) = (3000\ [\text{T}] - 500\ [\text{T}])/5\ [\text{packet}] = 500\ [\text{T/packet}]$$

Then, the RTS is obtained in the following manner with the formula (1) and the above Pts where the TS rate is RTS.

$$\text{RTS} = \text{N\_bits}/\text{Pts} \times \text{T} = 1504\ [\text{bit/packet}]/500\ [\text{T/packet}] \times (7/64\ [\text{us}]) = 27.5\ [\text{Mbps}]$$

The RTS = 27.5 [Mbps] calculated in this way is supplied to the readout control unit 34 as the TS rate. The readout from the buffer 31 is performed based on the TS rate, so that the TSs can be successively output by the smoothing function by the output I/F 23 even though the PLP is intermittently input as described with reference to Fig. 6.

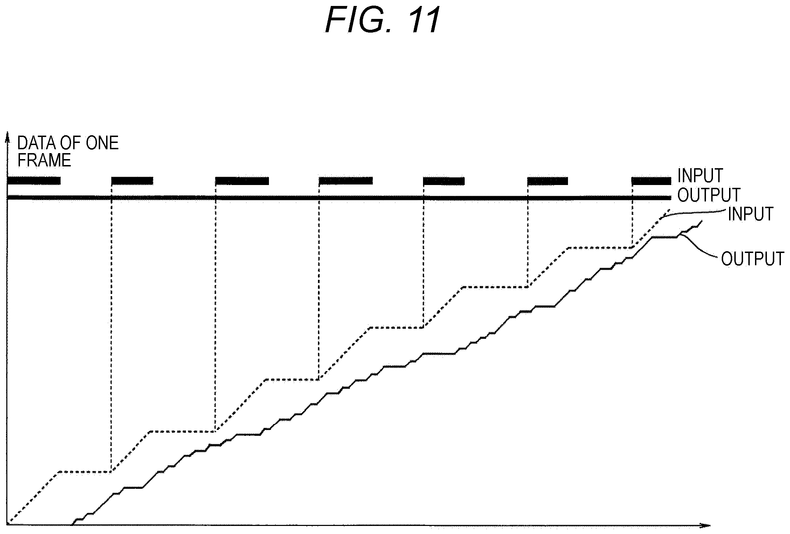

Fig. 11 illustrates a relationship between an input and an output when an error does not occur. In Fig. 11, the upper bar lines represent that data of one frame are intermittently input, and the lower straight line represents that the TSs generated by the processing of frames is sequentially output. When the TSs are sequentially output in this way, writing and readout of data are performed with respect to the buffer 31 as indicated by the lower timing charts of Fig. 11.

In the timing chart of Fig. 11, an axis in the horizontal direction represents a time axis, and the direction of time proceeds from left to right in the drawing. Further, an axis in the vertical direction represents an address of data accumulated in the buffer 31, and the address proceeds as going upward in the drawing. The dotted line represents a write address and the solid line represents a readout address, respectively, in Fig. 11.

As illustrated in Fig. 11, in the output I/F 23, when a TS packet (data of one frame) of the T2 frame is input, storage of the input TS packet into the buffer 31 is started by the writing control unit 32, and readout of the TS packet stored in the buffer 31 is started by the readout control unit 34. The start of readout is performed based on a TTO. The TS packets accumulated in the buffer 31 is started to read out after a certain amount is accumulated at a timing determined by the TTO, and writing and readout are then continuously performed.

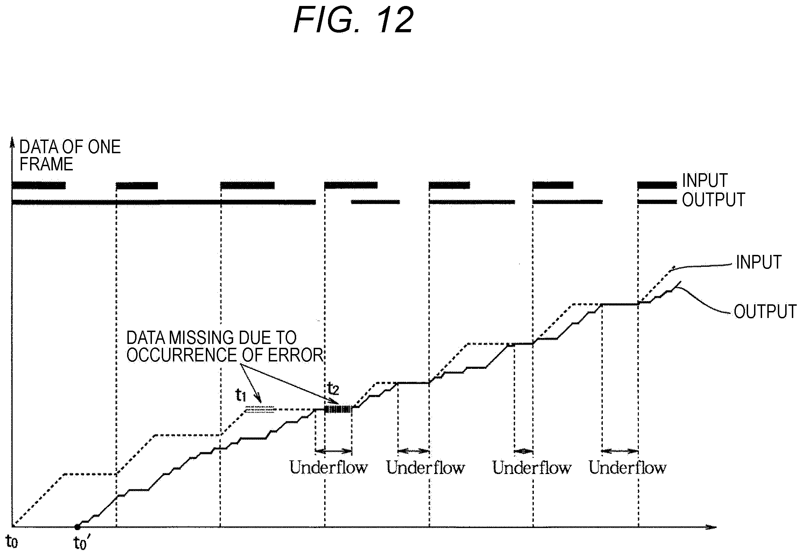

As illustrated in Fig. 11, inclinations that indicate speeds of the write address and the readout address are different, and the readout control unit 34 reads out the TS packet asynchronously with the writing of the TS packet. When the relationship between the writing and the readout that are performed in an asynchronous manner fails due to occurrence of some sort of error, there is a possibility of occurrence of an underflow or an overflow. The timing chart when such an underflow occurs is illustrated in Fig. 12.

In the timing chart illustrated in Fig. 12, some sort of error occurs during a time t1, and therefore, data missing occurs. Also, data missing occurs due to occurrence of an error during a time t2. Since outputs of the TSs are continuously performed despite the fact that the data amount in the buffer 31 is decreased due to the data missing and the data missing also occurs in the time t2, buffering (accumulation) is not performed, resulting in no TS to be output and occurrence of an underflow. Further, after the time t2 has passed, sufficient data is not buffered despite the fact that the data is buffered, resulting in occurrence of an underflow again.

In such a state, a timing of the output start of the TS (a time t0' in Fig. 12) is determined by the TTO, for example. Further, on and after the time t0', it is a state in which the readout is controlled to output the TS when the data of one packet or more are accumulated in the buffer 31. Under such a state, when some sort of error occurs after the output start of the TS and the output state becomes unstable as illustrated in Fig. 12, there is a possibility of losing a value of the Deleted Null Packet (DNP).

In the case where the value of the DNP is lost, replacing the DNP with 0, and quickly processing the buffer can be considered as a solution to the problem. At this time, the digestion rate of the buffer becomes faster, and at the timing, a non-output period of the TS occurs . Although the non-output period is not a favorable state, this period is caused by the unstable reception state, and is not unrestorable. Therefore, it can be processed as an allowable error.

However, after the state is restored to a state in which no error occurs, in other words, the state enters a stable reception state, and after an output of the TS is resumed at a timing when one packet or more of the TSs are accumulated in the buffer 31, a packet including the TTO is output earlier than the timing indicated by the TTO, the buffer 31 may be underflown, and the non-output period of the TS may occur. That is, as illustrated in Fig. 12, at a timing after the time t2 has passed, the state in which the writing is being performed normally but the underflow continuously occurs is not an allowable error, and it is necessary to eliminate the possibility that the state cannot be restored to a normal state.

Therefore, a case of performing readout using the TTO will be described, in order not to cause the non-output period of the TS, especially, not to cause the occurrence of an underflow or an overflow despite the state has been restored after the occurrence of an error.

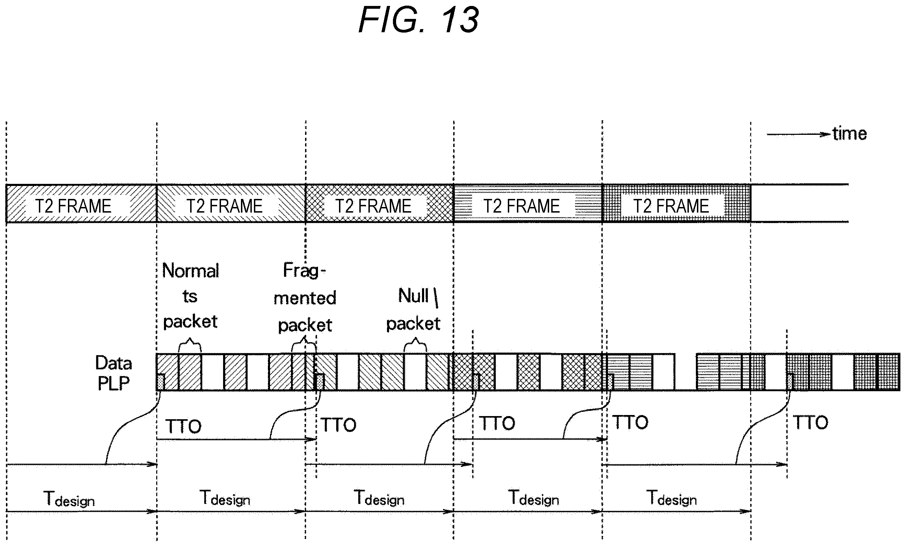

The TTO is inserted into every Interleaving frame as illustrated in Fig. 13. As described in the description with reference to Fig. 9, the TTO is an abbreviation for Time to Output, and is information included in the ISCR and indicating a timestamp added at the transmission device side at the time of transmitting TS packets. The TTO is also information indicating a time to output the TS packet from a head of a P1 symbol arranged in a T2 frame in which the processing of the TS packet is being performed (a timing at which the TS packet should be output) . At the reception side, during this time, adjustment such as adding a delay time specific to the receiver side and the like is performed, and the output timing is set.

The information of such a TTO is used to know a timing at which buffering of the PLP is started in the buffer 31 and an output of the TS is started. For example, in a case where the buffering of the PLP is started at a timing of a time t0, and the output of the TS is started at a timing of a time t0' in Fig. 12, the TTO is used as the information for setting the readout is started at the timing of the time t0'. Note that the black spot in the drawing indicates a timing determined using the TTO. In Fig. 12, the black spot is only one, and it can be seen that the TTO is used only at the timing of the start of readout.

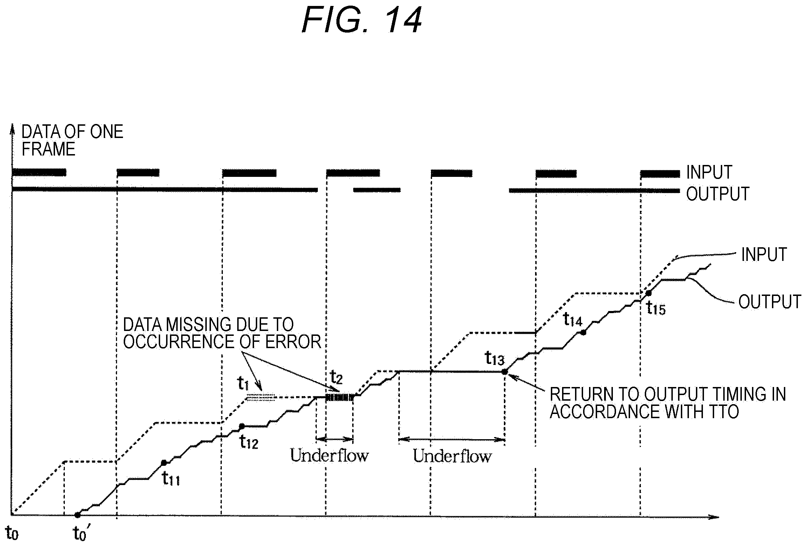

Therefore, the readout control unit 34 not only uses the TTO to set the timing of the start of readout, but also uses the TTO to control the readout when the readout has been started and is continuously performed, as illustrated in Fig. 14. As illustrated in Fig. 14, first, the time t0' is set based on the TTO, and an output of the TS is started. A time t11 is set based on the TTO read out from the next frame, and the TS is output based on the time t11. Although an error occurs during the time t1, a time t12 is set from the TTO included in a frame obtained at a timing before the error occurs, and the output of the TS is performed based on the time t12.

However, an error also occurs during the time t2, and an underflow occurs. This situation is the same as the state described with reference to Fig. 12. After the time t2 has passed, if a state in which the TTO cannot be obtained is continued, the underflow may be continued. However, when the TTO is obtained, a time t13 based on the TTO is set, and an output of the TS from the time t13 is started again. Following that, a stable state is continued, the TTO can be stably obtained, and a time based on the TTO is set, and the TS is output based on the set time.

In this way, after the state is restored to the stable state, the TTO can be stably obtained, and the TS is output based on the stably obtained TTO. Therefore, as illustrated in Fig. 12, occurrence of an underflow can be prevented at a timing after the state is restored to the stable state.

Further, the output rate of the TS may be shifted due to an error of a clock frequency. It can be considered to adjust the output rate of the TS larger than a calculated value and to output the TS based on the value in consideration of the error. However, the output at such an early timing may cause an underflow. Fine adjustment of the output timing for each frame can be performed by controlling the output based on the TTO as described above. Therefore, large jitter of the output timing can be avoided.

Note that, in the above-described embodiment, an example of controlling the output timing based on the TTO has been described. However, the output timing may be controlled based on information other than the TTO. The TTO is signaling included in a frame, and the output timing can be controlled using such signaling.

Further, the present technology can be applied to a case in which information included in data and used for setting a timing of an output of the data is continuously used to set and correct a timing of readout. Further, while the above-described embodiment has been described by taking DVB-T2 as an example, the present technology can be applied to other broadcasting systems, such as DVB-C2. For example, when the present technology is applied to DVB-C2, BUFSTAT signaled in a C2 frame in the DVB-C2 standard can be used. Further, in this case, data is read out according to a timing determined by BUFSTAT.

[Recording Medium]

The series of the above-described processing can be executed by hardware or can be executed by software. When the series of processing is performed by software, programs that configure the software are installed into a computer. Here, examples of the computer include a computer incorporated in dedicated hardware, and a general-purpose computer capable of executing various functions by installing various programs.

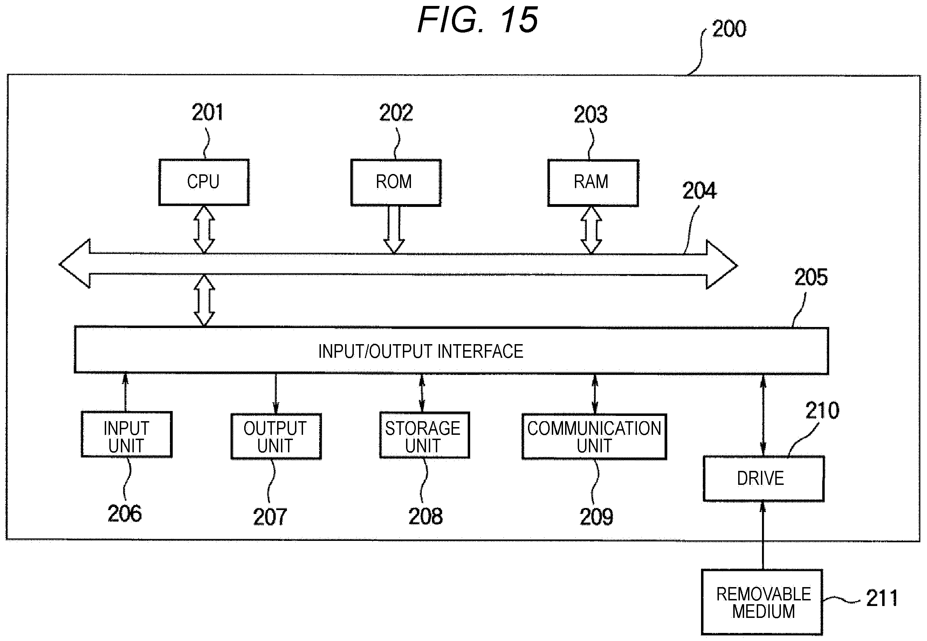

Fig. 15 is a block diagram illustrating a configuration example of hardware of a computer that executes the above-described series of processing by programs. In the computer, a central processing unit (CPU) 201, a read only memory (ROM) 202, and a random access memory (RAM) 203 are mutually connected by a bus 204. Further, an input/output interface 205 is connected to the bus 204. An input unit 206, an output unit 207, a storage unit 208, a communication unit 209, and a drive 210 are connected to the input/output interface 205.

The input unit 206 is made of a keyboard, a mouse, a microphone, and the like. The output unit 207 is made of a display, a speaker, and the like. The storage unit 208 is made of a hard disk, a non-volatile memory, and the like. The communication unit 209 is made of a network interface, and the like. The drive 210 drives a removable medium 211 such as a magnetic disk, an optical disk, a magneto-optical disk, and a semiconductor memory.

In the computer configured as described above, the CPU 201 loads the programs stored in the storage unit 208 to the RAM 203 through the input/output interface 205 and the bus 204, and executes the programs to perform the above-described series of processing.

The programs executed by the computer (CPU 201) can be provided by being recorded on the removable medium 211 as a package media and the like. Alternatively, the programs can be provided through a wired or wireless transmission medium, such as a local area network, the Internet, and digital satellite broadcasting.

In the computer, the programs can be installed into the storage unit 208 through the input/output interface 205 by attaching the removal medium 211 to the drive 210. Alternatively, the programs can be received by the communication unit 209 through the wired or wireless transmission medium and can be installed into the storage unit 208. Other than the above, the programs can be installed into the ROM 202 or the storage unit 208, in advance.

Note that the programs executed by the computer may be programs in which processing is performed in time series along the order described in the present specification, or may be programs in which the processing is performed in parallel or is performed at a necessary timing such as when it is called.

In the present specification, the system represent the entire apparatus configured from a plurality of devices.

REFERENCE SIGNS LIST

10 reception device, 11 antenna, 12 acquisition unit, 13 transmission line decoding processing unit, 14 decoder, 15 output unit, 21 demodulation unit, 22 error correction unit, 23 output I/F, 31 buffer, 32 writing control unit, 33 readout rate calculation unit, 34 readout control unit

**Claims**

1. A data readout device comprising:

   a buffer unit (31) configured to accumulate multiple physical layer pipe data;
   a writing control unit (32) to control a writing address of the buffer unit;
   a readout rate calculation unit (33) to calculate a transport stream rate; and
   a readout unit (34) configured to read out the data accumulated in the buffer unit according to the transport stream rate, wherein the data is accumulated in the buffer unit in frames each frame comprising a transport stream packet, and
   wherein the readout unit is configured to:

   read out data from the buffer unit as a sequence of frames, information of which is signaled, from the buffer unit at a timing specified by the information signaled in the data, and wherein
   the timing is specified in each frame, wherein each frame is a digital video broadcasting frame, and
   the readout control unit is configured to use the information specified in a first frame of the sequence to set the timing of the start of readout of the sequence of frames, and
   to use the information for each subsequent frame to set the timing of readout of those subsequent frames when the readout has been started and is continuously performed, **characterised in that** if data missing occurs due to occurrence of an error in the data input to the buffer unit, a timing of readout is set using information signaled in the data of a frame obtained at a timing before the error occurred, and data is read out from the buffer unit at that timing.

2. A data readout device according to claim 1,
   wherein, following occurrence of the error, upon occurrence and continuation of an underflow, then upon occurrence of new signaled information to be read, a timing of readout is set based thereon, and readout restarted based on the new timing of readout.

3. The data readout device according to any of claims 1 to 2, wherein the information is a TTO signaled in a T2 frame in DVB-T2 standard.

4. The data readout device according to any of claims 1 to 3, wherein the information is BUFSTAT signaled in a C2 frame in DVB-C2 standard, and the data is read out according to a timing determined by the BUFSTAT.

5. The data readout device according to any of claims 1 to 4, wherein the device is configured to use a digital terrestrial television broadcasting system.

6. The data readout device according to any preceding claim, wherein the device includes a display and a speaker.

7. A method of reading out data in a data readout device including:

   a buffer unit configured to accumulate multiple physical layer pipe data;
   a writing control unit (32) to control a writing address of the buffer unit;
   a readout rate calculation unit (33) to calculate a transport stream rate; and
   a readout unit configured to read out the data accumulated in the buffer unit according to the transport stream rate, wherein the data is accumulated in the buffer unit in frames each frame comprising a transport stream packet, and
   the method comprising the steps of:

   controlling the readout unit to read out data from the buffer unit as a sequence of frames, information of which is signaled, from the buffer unit at a timing specified by the information signaled by the data, wherein the timing is specified in each frame, wherein each frame is a digital video broadcasting frame;
   using the information specified in a first frame of the sequence to set the timing of the start of readout of the sequence of frames; and
   using the information for each subsequent frame to set the timing of readout of those subsequent frames when the readout has been started and is continuously performed, **characterised in that** if data missing occurs due to occurrence of an error in the data input to the buffer unit, a timing of readout is set using information signaled in the data of a frame obtained at a timing before the error occurred, and data is read out from the buffer unit at that timing.

8. A method according to claim 7, wherein, following occurrence of the error, upon occurrence and continuation of an underflow, then upon occurrence of new signaled information to be read, a timing of readout is set based thereon, and readout restarted based on the new timing of readout.

9. A method according to any of claims 7-8, wherein the information is a TTO signaled in a T2 frame in DVB-T2 standard.

10. A method according to any of claims 7-9, wherein the information is BUFSTAT signaled in a C2 frame in DVB-C2 standard, and the data is read out according to a timing determined by the BUFSTAT.

11. The method according to any of claims 7 to 10, wherein the device is configured to use a digital terrestrial television broadcasting system.

12. The method according to any of claims 7 to 11, wherein the device includes a display and a speaker.

13. A computer-readable program for causing a computer configured to control a data readout device including:

a buffer unit configured to accumulate multiple physical layer pipe data;
a writing control unit (32) to control a writing address of the buffer unit;
a readout rate calculation unit (33) to calculate a transport stream rate; and
a readout unit configured to read out the data accumulated in the buffer unit according to the transport stream rate, wherein the data is accumulated in the buffer unit in frames each frame comprising a transport stream packet, and
to execute processing including the steps of:

controlling the readout unit to read out data from the buffer unit as a sequence of frames, information of which is signaled, from the buffer unit at a timing specified by the information signaled in the data, wherein the timing is specified in each frame, wherein each frame is a digital video broadcasting frame;
using the information specified in a first frame of the sequence to set the timing of the start of readout of the sequence of frames; and
using the information for each subsequent frame to set the timing of readout of those subsequent frames when the readout has been started and is continuously performed, **characterised in that** if data missing occurs due to occurrence of an error in the data input to the buffer unit, a timing of readout is set using information signaled in the data of a frame obtained at a timing before the error occurred, and data is read out from the buffer unit at that timing.

## Patentansprüche

1. Datenauslesevorrichtung, umfassend:

eine Puffereinheit (31), ausgelegt zum Akkumulieren mehrerer Bitübertragungsschicht-Pipe-Daten;
eine Schreibsteuereinheit (32) zum Steuern einer Schreibadresse der Puffereinheit;
eine Ausleserate-Berechnungseinheit (33) zum Berechnen einer Transportstromrate; und
eine Ausleseeinheit (34), ausgelegt zum Auslesen der in der Puffereinheit akkumulierten Daten gemäß der Transportstromrate, wobei die Daten in der Puffereinheit in Rahmen akkumuliert werden, wobei jeder Rahmen ein Transportstrompaket umfasst, und
wobei die Ausleseeinheit ausgelegt ist zum:

Auslesen von Daten aus der Puffereinheit als eine Sequenz von Rahmen, wobei Informationen über diese signalisiert werden, aus der Puffereinheit zu einem durch die in den Daten signalisierten Informationen spezifizierten Zeitpunkt, und wobei
der Zeitpunkt in jedem Rahmen spezifiziert ist, wobei jeder Rahmen ein Digitalvideorundsenderahmen ist, und die Auslesesteuereinheit ausgelegt ist zum Verwenden der in einem ersten Rahmen der Sequenz spezifizierten Informationen zum Einstellen des Zeitpunkts des Beginns des Auslesens der Sequenz von Rahmen, und

zum Verwenden der Informationen für jeden nachfolgenden Rahmen zum Einstellen des Auslesezeitpunkts jener nachfolgenden Rahmen, wenn das Auslesen begonnen wurde und kontinuierlich durchgeführt wird, **dadurch gekennzeichnet, dass**, falls ein Fehlen von Daten aufgrund eines Auftretens eines Fehlers in den in die Puffereinheit eingegebenen Daten auftritt, ein Auslesezeitpunkt unter Verwendung von Informationen, die in den Daten eines zu einem Zeitpunkt vor Auftreten des Fehlers erhaltenen Rahmens signalisiert wurden, eingestellt wird, und Daten zu diesem Zeitpunkt aus der Puffereinheit ausgelesen werden.

2.  Datenauslesevorrichtung nach Anspruch 1,
    wobei ein Auslesezeitpunkt, nach Auftreten des Fehlers, bei Auftreten und Andauern eines Unterlaufs, dann bei Auftreten zu lesender neuer signalisierter Informationen, basierend darauf eingestellt wird, und das Auslesen basierend auf dem neuen Auslesezeitpunkt erneut begonnen wird.

3.  Datenauslesevorrichtung nach einem der Ansprüche 1 bis 2, wobei es sich bei den Informationen um eine in einem T2-Rahmen im DVB-T2-Standard signalisierte TTO handelt.

4.  Datenauslesevorrichtung nach einem der Ansprüche 1 bis 3, wobei es sich bei den Informationen um ein in einem C2-Rahmen im DVB-C2-Standard signalisiertes BUFSTAT handelt, und die Daten gemäß einem durch das BUFSTAT bestimmten Zeitpunkt ausgelesen werden.

5.  Datenauslesevorrichtung nach einem der Ansprüche 1 bis 4, wobei die Vorrichtung ausgelegt ist zum Verwenden eines digitalen terrestrischen Fernsehrundsendesystems.

6.  Datenauslesevorrichtung nach einem der vorhergehenden Ansprüche, wobei die Vorrichtung eine Anzeige und einen Lautsprecher umfasst.

7.  Verfahren zum Auslesen von Daten in einer Datenauslesevorrichtung, umfassend:

    eine Puffereinheit, ausgelegt zum Akkumulieren mehrerer Bitübertragungsschicht-Pipe-Daten;
    eine Schreibsteuereinheit (32) zum Steuern einer Schreibadresse der Puffereinheit;
    eine Ausleserate-Berechnungseinheit (33) zum Berechnen einer Transportstromrate; und
    eine Ausleseeinheit, ausgelegt zum Auslesen der in der Puffereinheit akkumulierten Daten gemäß der Transportstromrate, wobei die Daten in der Puffereinheit in Rahmen akkumuliert werden, wobei jeder Rahmen ein Transportstrompaket umfasst, und
    wobei das Verfahren die folgenden Schritte umfasst:

    Steuern der Ausleseeinheit zum Auslesen von Daten aus der Puffereinheit als eine Sequenz von Rahmen, wobei Informationen über diese signalisiert werden, aus der Puffereinheit zu einem durch die durch die Daten signalisierten Informationen spezifizierten Zeitpunkt, wobei der Zeitpunkt in jedem Rahmen spezifiziert ist, wobei jeder Rahmen ein Digitalvideorundsenderahmen ist; Verwenden der in einem ersten Rahmen der Sequenz spezifizierten Informationen zum Einstellen des Zeitpunkts des Beginns des Auslesens der Sequenz von Rahmen; und
    Verwenden der Informationen für jeden nachfolgenden Rahmen zum Einstellen des Auslesezeitpunkts jener nachfolgenden Rahmen, wenn das Auslesen begonnen wurde und kontinuierlich durchgeführt wird, **dadurch gekennzeichnet, dass**, falls ein Fehlen von Daten aufgrund eines Auftretens eines Fehlers in den in die Puffereinheit eingegebenen Daten auftritt, ein Auslesezeitpunkt unter Verwendung von Informationen, die in den Daten eines zu einem Zeitpunkt vor Auftreten des Fehlers erhaltenen Rahmens signalisiert wurden, eingestellt wird, und Daten zu diesem Zeitpunkt aus der Puffereinheit ausgelesen werden.

8.  Verfahren nach Anspruch 7, wobei ein Auslesezeitpunkt, nach Auftreten des Fehlers, bei Auftreten und Andauern eines Unterlaufs, dann bei Auftreten zu lesender neuer signalisierter Informationen, basierend darauf eingestellt wird, und das Auslesen basierend auf dem neuen Auslesezeitpunkt erneut begonnen wird.

9.  Verfahren nach einem der Ansprüche 7-8, wobei es sich bei den Informationen um eine in einem T2-Rahmen im DVB-T2-Standard signalisierte TTO handelt.

10. Verfahren nach einem der Ansprüche 7-9, wobei es sich bei den Informationen um ein in einem C2-Rahmen im DVB-C2-Standard signalisiertes BUFSTAT handelt, und die Daten gemäß einem durch das BUFSTAT bestimmten Zeitpunkt ausgelesen werden.

11. Verfahren nach einem der Ansprüche 7 bis 10, wobei die Vorrichtung ausgelegt ist zum Verwenden eines digitalen terrestrischen Fernsehrundsendesystems.

12. Verfahren nach einem der Ansprüche 7 bis 11, wobei die Vorrichtung eine Anzeige und einen Lautsprecher umfasst.

13. Computerlesbares Programm zum Bewirken, dass ein Computer, ausgelegt zum Steuern einer Datenauslesevorrichtung, umfassend:

eine Puffereinheit, ausgelegt zum Akkumulieren mehrerer Bitübertragungsschicht-Pipe-Daten;
eine Schreibsteuereinheit (32) zum Steuern einer Schreibadresse der Puffereinheit;
eine Ausleserate-Berechnungseinheit (33) zum Berechnen einer Transportstromrate; und
eine Ausleseeinheit, ausgelegt zum Auslesen der in der Puffereinheit akkumulierten Daten gemäß der Transportstromrate, wobei die Daten in der Puffereinheit in Rahmen akkumuliert werden, wobei jeder Rahmen ein Transportstrompaket umfasst,
eine Verarbeitung durchführt, die die Folgenden Schritte umfasst:

Steuern der Ausleseeinheit zum Auslesen von Daten aus der Puffereinheit als eine Sequenz von Rahmen, wobei Informationen über diese signalisiert werden, aus der Puffereinheit zu einem durch in den die Daten signalisierten Informationen spezifizierten Zeitpunkt, wobei der Zeitpunkt in jedem Rahmen spezifiziert ist, wobei jeder Rahmen ein Digitalvideorundsenderahmen ist; Verwenden der in einem ersten Rahmen der Sequenz spezifizierten Informationen zum Einstellen des Zeitpunkts des Beginns des Auslesens der Sequenz von Rahmen; und
Verwenden der Informationen für jeden nachfolgenden Rahmen zum Einstellen des Auslesezeitpunkts jener nachfolgenden Rahmen, wenn das Auslesen begonnen wurde und kontinuierlich durchgeführt wird, **dadurch gekennzeichnet, dass**, falls ein Fehlen von Daten aufgrund eines Auftretens eines Fehlers in den in die Puffereinheit eingegebenen Daten auftritt, ein Auslesezeitpunkt unter Verwendung von Informationen, die in den Daten eines zu einem Zeitpunkt vor Auftreten des Fehlers erhaltenen Rahmens signalisiert wurden, eingestellt wird, und Daten zu diesem Zeitpunkt aus der Puffereinheit ausgelesen werden.

**Revendications**

1. Dispositif de lecture de données comprenant :

une unité tampon (31) configurée pour accumuler de multiples données de conduit de couche physique ;
une unité de contrôle d'écriture (32) pour contrôler une adresse d'écriture de l'unité tampon ;
une unité de calcul de vitesse de lecture (33) pour calculer une vitesse de flux de transport ; et
une unité de lecture (34) configurée pour lire les données accumulées dans l'unité tampon en fonction de la vitesse de flux de transport, dans lequel les données sont accumulées dans l'unité tampon dans des trames, chaque trame comprenant un paquet de flux de transport, et
dans lequel l'unité tampon est configurée pour :

lire des données de l'unité tampon en tant que séquence de trames, dont des informations sont signalées, à partir de l'unité tampon à un moment spécifié par les informations signalées dans les données, et dans lequel le moment est spécifié dans chaque trame, dans lequel chaque trame est une trame de diffusion vidéo numérique, et
l'unité de contrôle de lecture est configurée pour utiliser les informations spécifiées dans une première trame de la séquence pour définir le moment du début de lecture de la séquence de trames, et pour utiliser les informations pour chaque trame ultérieure pour définir le moment de lecture de ces trames ultérieures lorsque la lecture a été commencée et est exécutée en continu, **caractérisé en ce que** si des données manquantes se produisent en raison d'une occurrence d'une erreur dans l'entrée de données sur l'unité tampon, un moment de lecture est défini à l'aide des informations signalées dans les données d'une trame obtenue à un moment avant que l'erreur se produise, et des données sont lues à partir de l'unité tampon à ce moment.

**2.** Dispositif de lecture de données selon la revendication 1,
dans lequel, suite à l'occurrence de l'erreur, lors de l'occurrence et la continuation d'un sous-flux, alors lors de l'occurrence de nouvelles informations signalées comme étant à lire, un moment de lecture est défini basé sur celles-ci, et une lecture est redémarrée sur la base du nouveau moment de lecture.

**3.** Dispositif de lecture de données selon l'une quelconque des revendications 1 à 2, dans lequel les informations sont un TTO signalé dans une trame T2 dans une norme DVB-T2.

**4.** Dispositif de lecture de données selon l'une quelconque des revendications 1 à 3, dans lequel les informations sont un BUFSTAT signalé dans une trame C2 dans une norme DVB-C2, et les données sont lues en fonction d'un moment déterminé par le BUFSTAT.

**5.** Dispositif de lecture de données selon l'une quelconque des revendications 1 à 4, dans lequel le dispositif est configuré pour utiliser un système de diffusion de télévision terrestre numérique.

**6.** Dispositif de lecture de données selon l'une quelconque des revendications précédentes, dans lequel le dispositif inclut un dispositif d'affichage et un haut-parleur.

**7.** Procédé de lecture de données dans un dispositif de lecture de données comprenant :

une unité tampon configurée pour accumuler de multiples données de conduit de couche physique ;
une unité de contrôle d'écriture (32) pour contrôler une adresse d'écriture de l'unité tampon ;
une unité de calcul de vitesse de lecture (33) pour calculer une vitesse de flux de transport ; et
une unité de lecture configurée pour lire les données accumulées dans l'unité tampon en fonction de la vitesse de flux de transport, dans lequel les données sont accumulées dans l'unité tampon dans des trames, chaque trame comprenant un paquet de flux de transport, et
le procédé comprenant les étapes consistant à :

commander à l'unité tampon de lire des données à partir de l'unité tampon en tant que séquence de trames, dont des informations sont signalées, à partir de l'unité tampon à un moment spécifié par les informations signalées par les données, dans lequel le moment est spécifié dans chaque trame, dans lequel chaque trame est une trame de diffusion vidéo numérique ;
utiliser les informations spécifiées dans une première trame de la séquence pour définir le moment du début de lecture de la séquence de trames ; et
utiliser les informations pour chaque trame ultérieure pour définir le moment de lecture de ces trames ultérieures lorsque la lecture a été commencée et est exécutée en continu,
**caractérisé en ce que** si des données manquantes se produisent en raison d'une occurrence d'une erreur dans l'entrée de données sur l'unité tampon, un moment de lecture est défini à l'aide des informations signalées dans les données d'une trame obtenues à un moment avant que l'erreur se produise, et des données sont lues à partir de l'unité tampon à ce moment.

**8.** Procédé selon la revendication 7, dans lequel, suite à l'occurrence de l'erreur, lors de l'occurrence et la continuation d'un sous-flux, alors lors de l'occurrence de nouvelles informations signalées comme étant à lire, un moment de lecture est défini basé sur celles-ci, et une lecture est redémarrée sur la base du nouveau moment de lecture.

**9.** Procédé selon l'une quelconque des revendications 7 à 8, dans lequel les informations sont un TTO signalé dans une trame T2 dans une norme DVB-T2.

**10.** Procédé selon l'une quelconque des revendications 7 à 9, dans lequel les informations sont un BUFSTAT signalé dans une trame C2 dans une norme DVB-C2, et les données sont lues en fonction d'un moment déterminé par le BUFSTAT.

**11.** Procédé selon l'une quelconque des revendications 7 à 10, dans lequel le dispositif est configuré pour utiliser un système de diffusion de télévision terrestre numérique.

**12.** Procédé selon l'une quelconque des revendications 7 à 11, dans lequel le dispositif inclut un dispositif d'affichage et un haut-parleur.

**13.** Programme lisible par ordinateur permettant d'amener un ordinateur configuré pour commander un dispositif de lecture de données comprenant :

une unité tampon configurée pour accumuler de multiples données de conduit de couche physique ;
une unité de contrôle d'écriture (32) pour contrôler une adresse d'écriture de l'unité tampon ;
une unité de calcul de vitesse de lecture (33) pour calculer une vitesse de flux de transport ; et
une unité de lecture configurée pour lire les données accumulées dans l'unité tampon en fonction de la vitesse de flux de transport, dans lequel les données sont accumulées dans l'unité tampon dans des trames, chaque trame comprenant un paquet de flux de transport, à exécuter le traitement comprenant les étapes consistant à :

commander à l'unité tampon de lire des données à partir de l'unité tampon en tant que séquence de trames, dont des informations sont signalées, à partir de l'unité tampon à un moment spécifié par les informations signalées dans les données, dans lequel le moment est spécifié dans chaque trame, dans lequel chaque trame est une trame de diffusion vidéo numérique ;
utiliser les informations spécifiées dans une première trame de la séquence pour définir le moment du début de lecture de la séquence de trames ; et
utiliser les informations pour chaque trame ultérieure pour définir le moment de lecture de ces trames ultérieures lorsque la lecture a été commencée et est exécutée en continu,
**caractérisé en ce que** si des données manquantes se produisent en raison d'une occurrence d'une erreur dans l'entrée de données sur l'unité tampon, un moment de lecture est défini à l'aide des informations signalées dans les données d'une trame obtenue à un moment avant que l'erreur se produise, et des données sont lues à partir de l'unité tampon à ce moment.

*FIG. 1*

Tx Rx

Normal MPEG demux & Decoder

TS1 TS2 TSN

Mux

TSPS1 (PLP1) TSPS2 (PLP2) TSPSN (PLPN) TSPSC (CPLP)

DVB-T2 Physical Layer

(including NULL packet removal/insertion)

DataPLP

CommonPLP

TSPS1 (PLP1) TSPS2 (PLP2) TSPSN (PLPN) TSPSC (CPLP)

Remux

TS1 TS2 TSN

Receiver processing

Network processing

DVB-T2 PL with extension

## FIG. 2

Null PACKET    COMMON PACKET

TS1 — TS PACKET (SERVICE 1)

TS2 — TS PACKET (SERVICE 2)

TS3 — TS PACKET (SERVICE 3)

TS4 — TS PACKET (SERVICE 4)

COMMON PACKET

Null PACKET

TS PACKET

# FIG. 3

Null PACKET     Null PACKET

Data PLP 1 ··················· TS PACKET (SERVICE 1)

Data PLP 2 ··················· TS PACKET (SERVICE 2)

Data PLP 3 ··················· TS PACKET (SERVICE 3)

Data PLP 4 ··················· TS PACKET (SERVICE 4)

EXTRACTION OF COMMON TS

Common PLP

COMMON PACKET

EP 2 696 580 B1

*FIG. 4*

Data PLP 1

Data PLP 2

Data PLP 3

Data PLP 4

Null PACKET

COMMON PACKET

TS PACKET (SERVICE 1)

TS PACKET (SERVICE 2)

TS PACKET (SERVICE 3)

TS PACKET (SERVICE 4)

EXTRACTION OF COMMON TS

Common PLP

## FIG. 5

EP 2 696 580 B1

## FIG. 6

EP 2 696 580 B1

## FIG. 7

Null PACKET  COMMON PACKET

Data PLP 1 — TS PACKET (SERVICE 1)

Data PLP 2 — TS PACKET (SERVICE 2)

Data PLP 3 — TS PACKET (SERVICE 3)

Data PLP 4 — TS PACKET (SERVICE 4)

EXTRACTION OF COMMON TS

Common PLP

EP 2 696 580 B1

# FIG. 8

Null PACKET

Data PLP 2    [TS PACKET (SERVICE 2)]

Common PLP

↓

TS2

EP 2 696 580 B1

FIG. 9

# FIG. 10

FIG. 11

# FIG. 12

EP 2 696 580 B1

# FIG. 13

T2 FRAME    T2 FRAME    T2 FRAME    T2 FRAME    T2 FRAME    → time

Normal ts packet    Frag-mented packet    Null \ packet

Data PLP

TTO    TTO    TTO    TTO    TTO

$T_{design}$    $T_{design}$    $T_{design}$    $T_{design}$    $T_{design}$

EP 2 696 580 B1

# FIG. 14

## FIG. 15

EP 2 696 580 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110037904 A1

**Non-patent literature cited in the description**

- Frame structure channel coding and modulation for a second generation digital terrestrial television broadcasting system (DVB-T2). DVB BlueBook A122 Rev.1. 01 September 2008